# EUROPEAN PATENT APPLICATION

(11) **EP 2 375 730 A1**
(43) Date of publication of application: **12.10.2011**
(21) Application number: 09835973.0
(22) Date of filing: 12.08.2009
(51) Int. Cl.: H04N 5/44

(54) **TELEVISION CAPABLE OF IMPLEMENTING FUNCTION EXTENSION**

(30) Priority: 03.01.2009 CN 200910013627
(71) Applicant: Haier Group Corporation, Qingdao Shandong 266101 (CN); Qingdao Haier Electronics Co., Ltd., Shandong 266101 (CN)
(72) Inventor: ZHAI, Yili, Qingdao Shandong 266101 (CN); HU, Xijia, Qingdao Shandong 266101 (CN); LIU, Chao, Qingdao Shandong 266101 (CN); CHEN, Yilong, Qingdao Shandong 266101 (CN); QIU, Yanqiang, Qingdao Shandong 266101 (CN); ZHANG, Ming, Qingdao Shandong 266101 (CN); GUO, Jianwei, Qingdao Shandong 266101 (CN); GAO, Xijuan, Qingdao Shandong 266101 (CN); CHEN, Long, Qingdao Shandong 266101 (CN); WANG, Chao, Qingdao Shandong 266101 (CN); LI, Quanyong, Qingdao Shandong 266101 (CN)
(74) Representative: Meissner, Bolte & Partner
(86) International application number: PCT/CN2009/073192
(87) International publication number: WO 2010/075686

(57) **Abstract**

A television is disclosed in the present invention, which includes a television core subsystem, a television function extension component and a gold finger connecter. The television core subsystem is configured within the interior of the television for receiving audio/video signal in different formats. The television function extension component is used for providing the option of different functions. The gold finger connector is electronically connected between the television core subsystem and the television function extension component, and includes a first connecting end and a second connecting end; wherein the first connecting end is configured on the television function extension component, the second connecting end is electronically connected to the television core subsystem, and the power signal terminal, communication signal terminal and audio/video signal terminal of the first connecting end correspond respectively to the power signal terminal, communication signal terminal and audio/video signal terminal of the second connecting end.

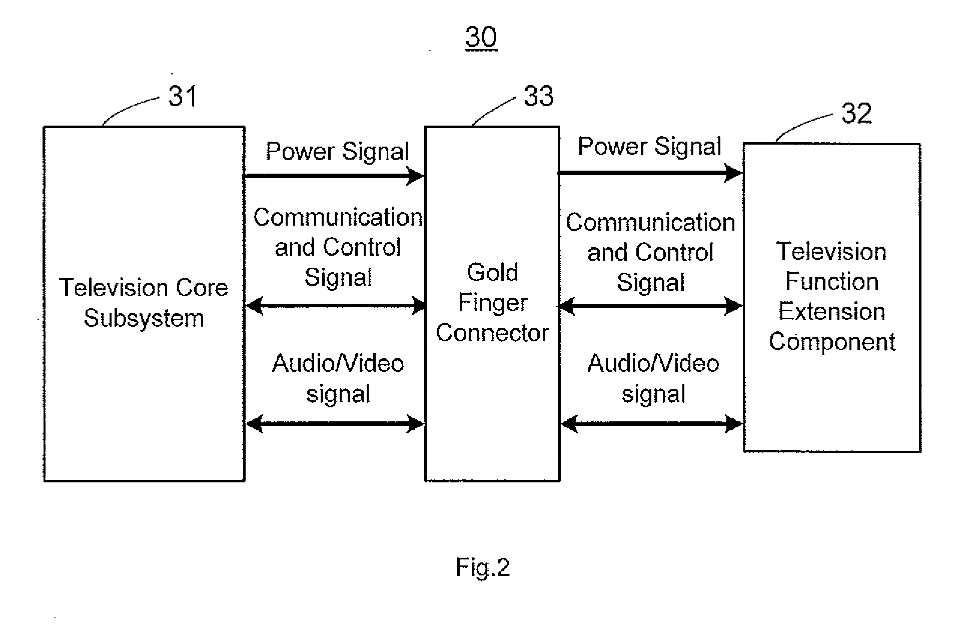

## Description

The present application claims the priority of a Chinese patent application No. 200910013627.x titled TELEVISION CAPABLE OF IMPLEMENTING FUNCTION EXTENSION" filed on January 3, 2009, and the disclosure of which is incorporated herein in its entirety by reference.

### Technical Field

The present invention relates to a television capable of implementing function extension. The television implements different functions through a television function extension component detachably mounted inside the television.

### Background Art

Currently, the widely used televisions are mainly those receiving analog signals. In the coming age of digital television, the digital signals are usually received through an external device, such as Set Top Box (STB), Digital Video Disc (DVD) and Digital Video Broadcasting (DVB, an internationally recognized open standard of digital television); then the digital signals undergo a digital-to-analogue conversion, and are converted into signals of low display resolution, such as A/V (standard video signals) interface signals or Y, U, V (analog component video signals emerging with DVD or satellite digital television STB) interface signals, so as to be displayed by the television. As illustrated in Fig. 1, a television is connected to a DVD STB, a DVB STB and an Internet Protocol (IP) television STB respectively through A/V ports, and then three remote controllers are required to control them respectively. At that time, people still see an analogue image of low resolution. Meanwhile, since there are various types of external devices, many resources of these devices are repeated, for example, each machine requires a power supply, each equipment requires a remote controller, and each product has output terminals of different numbers and colors. As a result, the external connections are complex, the mounting and usage are very inconvenient, a large space is occupied, and wiring is carried out each time a different equipment is used. Further, it is inconvenient to preserve and operate a plurality of remote controllers. When the user adds a new equipment, it must be a complete machine, thus the total use cost is high. Moreover, any equipments do not have output specifications, and the same type products may have very different interfaces and performances.

On the other hand, some expensive and high-end digital televisions have a display mode of high resolution (1080P, 1080i, 720P), and the external devices shall be matched them through many kinds of interfaces, such as Video Graphics Array (VGA), Digital Visual Interface (DVI) and High Definition Multimedia Interface (HDMI). Since the televisions have many kinds of interfaces, the output modes of the external matching products (e.g., the STB) are also various, and the output signals from the STB often cannot ensure that the best image quality effect of the high-end television is achieved.

The prior art also provides a combined television which has embedded DVD, DVB or IP television STB. For example, a Chinese invention patent application No. 200420109717.1 discloses a "TV digital video frequency optic disc playing integrated machine" which embeds a DVD playing function in a television, so that the television can not only broadcast TV programs, but also play the DVD. For another example, a Chinese invention patent application No. 200520115859.3 discloses a "Recordable IP TV-set integrated machine" which embeds an IP television STB in a liquid crystal display television.

However, within the above combined television, the DVD, DVB and IP television STB connect with core circuits of the television through different interface circuits. The various interfaces do not have uniform standards or function of extension or update, and it is difficult to add new digital program reception sources. In addition, the different interface types make it difficult to update the current system. More importantly, it is difficult to suit for the encryption TV receptions in different regions, and cannot meet the possibly different demands of information stream of respective regions and operators. Since a special function is integrated with the mainframe, the standardization of the mainframe is destroyed, and the special function may not be required by all the customers. Such type of machine is usually customized for special customer groups and used in a particular occasion, instead of being popularly demanded, so the product cannot be promoted comprehensively. Due to the differences between the combined modules of these combined televisions, the product specifications are non-uniform, thus it is difficult to realize the industry standardization and carry out the supporting production of related products in the industry. As a result, the production cost is high and the matching products are nonstandard.

With the development of the digital technology, processing (e.g., reading and decompressing) of audio/video (A/V) signals have been completely digitalized at present in the devices such as DVD, DVB and IP television STB, and the technical standards are normative. The digital A/V standard interface HDMI for the digital television has been promoted and popularized throughout the world. Thus it is unnecessary to transmit analog signals between these devices and the digital television, and it is an irresistible trend to directly transmit standard Audio and Video digital signals.

With respect to the above shortages of the prior art, and in order to overcome deficiencies of the existing television (e.g., high production cost, non-normative matching products, non-uniform standards of the same type of products, and it is complicated for the customers to purchase, mount and use) and suit the tendency of continuous development of digital television technologies, it is necessary to provide a television meeting the digital television standard, having a function of intelligent extension, having a wide adaptive range and being convenient for update.

### Summary of the Invention

An object of the present invention is to provide a television meeting the digital television standard and capable of providing different function options.

In order to achieve the above object, the present invention provides a television, comprising: a television core subsystem, a television function extension component and a gold finger connector. The television core subsystem is disposed inside the television for receiving audio/video signals in different formats; the television function extension component is used for providing different function options; the gold finger connector is electrically connected between the television core subsystem and the television function extension component, and comprises a first connection end and a second connecting end. The first connecting end is disposed on the television function extension component, and comprises a first power signal terminal, a first communication signal terminal, and a first Audio/Video signal terminal; the second connection end is electrically connected to the television core subsystem, and comprises a second power signal terminal, a second communication signal terminal, and a second Audio/Video signal terminal for being electrically connected to the first power signal terminal, the first communication signal terminal, and the first Audio/Video signal terminal of the first connection end, respectively.

Since the present invention provides the television by sufficiently considering factors such as the diversity of digital television signal sources, achieving the best display effect of the digital television, and extending the system capability in the future, the modular design is adopted and the television includes a television function extension component and a gold finger connector; a convenient connection and a flexible extension of the television function extension component may be realized by combining the modularization of the television function extension component and the standardization of the gold finger connector. Thus, the digital television source display standard is completely reflected, different types of digital television sources (e.g., digital broadcasting source, digital playing source and digital network source, etc.) can be watched, a transition from the analogue television at the present stage to the digital television can be completed, and function updates such as time tracking recordable, learning and entertainment and network download may be realized or new functions may be added. The consumer only needs to purchase a functional module of television function extension component which coincides with the standard interface, so as to provide combined usages of television function extension components having different functional modules with the television with a low and flexible cost, and an individual usage is also supported. Due to the flexibility of the "modular" configuration, the product consumption field is also extended, and new technologies and products may be added into the system for an application by incorporating a newly developed module.

### Brief Description of the Drawings

Fig. 1 is a schematic diagram of a receiving device of a conventional television;
Fig. 2 is a schematic block diagram of a system of a television provided by the present invention;
Fig. 3 is a block diagram of a circuit of a television provided by the present invention;
Fig. 4 is a block diagram of a circuit of a function extension module provided by the present invention; and
Fig. 5 illustrates a flowchart of a control method for a television provided by the present invention.

### Detailed Description of the Invention

Herein the embodiments of the present invention will be described in detailed with reference to the drawings in which the same or similar elements are represented by the same numeral reference, even if those elements are illustrated in different drawings.

Fig. 2 is a schematic block diagram of a system of a television according to the present invention.

Referring to Fig. 2, a television 30 of the present invention includes a television core subsystem 31, a television function extension component 32, and a gold finger connector 33 connected between them. The television 30 is provided with sockets (not illustrated) corresponding to the gold finger connector 33, for mounting the television function extension component 32.

The television core subsystem 31 is a main board of the television 30 and provided within the interior of the television. The television core subsystem 31 may receive, through various types of external interfaces of the television 30, Audio/Video signals in different formats. These signals may be analog signals or digital signals, including received Radio Frequency (RF) signal, Composite Video Broadcast Signal (CVBS), luminance/ chrominance (Y/C) signal, component signal (Y/Pb/Pr), Video Graphics Array (VGA) signal, Digital Visual Interface (DVI) signal, High Definition Multimedia Interface (HDMI) signal and any other existing Audio/Video signals. The Audio/Video signals are processed and then output to a display panel and a sounding device of the television. The television core subsystem 31 may be used with various types of television function extension components 32 through the gold finger connector 33.

The television function extension component 32 may extend the function of the television 30, and it performs an electric connection and a data communication with the television core subsystem 31 through the gold finger connector 33. The television function extension component 32 has uniform appearance dimensions and interface definitions, which may be used with the television core subsystem 31 and mounted to or dismounted from the television 30 through the gold finger connector 33. The television function extension component 32 includes modular circuits with different functions for implementing different functions. In the embodiment of the present invention, the television function extension component 32 represents a form of extension card, and the person skilled in the art may acquire other forms (e.g., extension box) of the television function extension component 32 based on the disclosure of the invention.

The television function extension component 32 of the present invention may be, but not limited to, a time tracking recordable extension card capable of playing high-definition (HD) video and recording video, a learning and entertainment extension card capable of learning English and playing games, a digital television extension card capable of playing digital signals in place of the TSB, a network download extension card capable of downloading movies from the network, etc. The television 30 supporting the television function extension component 32 may implement different functions by changing the television function extension components 32 with different functions.

The gold finger connector 33 includes plug terminals and plug slots (not illustrated). The plug terminals are provided on the television function extension component 32. The plug slots are provided in the socket of the television 30, and electrically connected to the television core subsystem 31, and capable of mounting and fixing the plug terminals disposed on the television function extension component 32. The plug terminals include a first power signal terminal, a first control signal terminal, and a first Audio/Video signal terminal. The plug slots include a second power signal terminal, a second control signal terminal, and a second Audio/Video signal terminal for being electrically connected to the first power signal terminal, the first control signal terminal and the first Audio/Video signal terminal of the plug terminals, respectively.

Of course, in another embodiment of the present invention, the positions of the plug terminals and the plug slots may be exchanged with each other, i.e., the plug slots are provided on the television function extension component 32, and the plug terminals are provided in the sockets of the television 30 and electrically connected to the television core subsystem 31.

As for the television function extension components 32 having different functions, the corresponding gold finger connectors 33 have plug terminals and plug slots of uniform specifications, which means that not only the arrangement rules of the electric signals of the plug terminals and the plug slots are the same, but also their physical dimension specifications are uniform.

As illustrated in Fig. 2, the signals transmitted by the gold finger connector 33 of the present invention include at least a power signal, a communication and control signal and an Audio/Video signal. Since the signals transmitted by the gold finger connector 33 of the present invention include the power signal, the television 30 may supply power to the television function extension component 32 through the power signal, and a control information liaison mechanism may be established between the television function extension component 32 and the television 30 through the communication and control signal, so as to transmit the Audio/Video signal between the television core subsystem 31 and the television function extension component 32.

At the same time of specifying the output standards of the power signal, the communication and control signal and the Audio/Video signal in virtue of the plug terminals and the plug slots of uniform specification, the gold finger connector 33 of the present invention also specifies the physical dimension of the extension interface of the television 30, so as to connect and fix the television function extension component 32 to the gold finger connectors 33 in a manner of plugging.

Since the present invention sufficiently considers factors such as the diversity of digital television signal sources, achieving the best display effect of the digital television, and extending the system capability in the future, the television function extension component 32 adopts the modular design, i.e., a convenient connection and a flexible extension of the product may be implemented by combining design standardization of the gold finger connector 33 and modularization of the television function extension component 32. Thus, the digital television source display standard is completely reflected, different types of digital television sources (e.g., digital broadcasting source, digital playing source and digital network source, etc.) can be watched, a transition from the analogue television at the present stage to the digital television can be completed, and function updates such as time tracking recordable, learning and entertainment and network download may be realized or new functions may be added. The consumer only needs to purchase a functional module of the television function extension component 32 which coincides with the standard interface, so as to provide combined usages of television function extension components 32 having different functional modules with the television 30 with a low and flexible cost, and an individual usage is also supported. Due to the flexibility of the "modular" configuration, the product consumption field is also extended, and new technologies and products may be added into the system for an application by incorporating a newly developed module.

The embodiments of the television used with television function extension components 32 of different functional modules in the invention are detailedly described as follows.

Fig. 3 is a block diagram of a circuit of a television provided by the present invention.

In which the television function extension component may be, but not limited to, an extension card. The embodiment of the present invention detailedly describes the circuit diagram of the television of the present invention by taking an example in which the television function extension component is an extension card. Referring to Fig. 3, a television 40 of the present invention includes a television core subsystem 41, an extension card 42, a gold finger connector 43 connected between the television core subsystem 41 and the extension card 42, a power module 44 and a Liquid Crystal Display (LCD) panel 45. Wherein the power module 44 electrically connects with the television core subsystem 41 and the LCD panel 45 to supply them with a working voltage, and supplies a working voltage to the extension card 42 via the gold finger connector 43. The power module 44 may also be incorporated to the interior of the television core subsystem 41.

The television core subsystem 41 is a main board of the television 40 and provided within the interior of the television, including functional modules such as a television core module 411, an audio output 412 and a memory 413.

The television core module 411 internally includes many functional units, such as a microprocessor, a graphics processor, a video processing unit, an audio processing unit, a demodulator, a decoder, a data communication bus and an Input/Output (I/O) interface. The television core module 411 may receive, through various external interfaces of the television 40, Audio/Video signals in different formats, and these signals may be analogue signals or digital signals. As illustrated in Fig. 3, these signals may include Audio/Video analogue signals or digital signals such as CVBS signals, Y/C signals, Y/Pb/Pr signals, DVI signals, HDMI signals, TV signals and VGA signals. The television core module 411 is connected to an external device and performs a communication therewith through a peripheral I/O interface. The communication may be performed through General Purpose IO Interface (GPIO), Pulse Width Modulation (PWM), Universal Asynchronous Receiver/Transmitter (UART) and Infrared (IR), etc. The television core module 411 processes the received signals in different formats, converts the video signals into Low Voltage Differential Signaling (LVDS) signals and outputs to the LCD panel 45 to display an image, and outputs the audio signals to the audio output 412 to generate a sound.

The audio output 412 converts an audio signal in the form of electric signal into a sound signal in the form of air vibration, and it may be a device such as horn, loudspeaker, etc.

Serving as a data storage unit of the television core module 411, the memory 413 may store Audio/Video signal data as well as communication and control signal data. The memory 413 includes a dynamic memory 4131 and a static memory 4132. The static memory 4132 is a memory of fixed assignment, which usually stores global variables or data and instructions before compilation, and may be a Flash. The dynamic memory 4131 is a memory of demand assignment, which usually stores formal parameters and automatic variables of a function or data and instructions assigned during operation, and may be a Dynamic Random Access Memory (DRAM) such as Double Data Rate (DDR) and Storage Data Register (SDR).

Referring to Fig. 3, the gold finger connector 43 includes plug slots 431 and plug terminals 432. The plug slots 431 may be provided on the television core subsystem 41, or individually provided on an adapter plate, depending on the arrangement of the extension card 42 in the television 40, so that the television 40 is smaller and lighter. The television core module 411 is electrically connected to the plug slots 431 to transmit the communication and control signals such as Universal Asynchronous Receiver/Transmitter (UART) / Inter-Integrated Circuit (IIC) / Infrared (IR) communication signal, and Audio/Video signal to the plug slot 431. The power module 44 is also electrically connected to the plug slots 431 to supply power signals (e.g., 12V/5V/3V voltage signals).

The plug terminals 432 is provided on the extension card 42, and it may be a gold finger plug made of a printed circuit board. When the plug terminals 432 are inserted into the plug slots 431, their conductive portions contact with each other to form an electric connection, so that the communication and control signal, the Audio/Video signal and the power signal are transmitted to the extension card 42. The surface of the conductive portion of the plug terminals 432 is plated with gold, which provides characteristics of good conductivity, wear resistant and antioxidant.

The extension card 42 includes a function extension module 421, an external interface 422, a memory 423 and a DC/DC power supply 424 provided on the Printed Circuit Board (PCB).

The function extension module 421 is the core part of the extension card 42, including a processor and various functional units. The function extension module 421 receives the communication and control signal and Audio/Video signal input from the plug terminal 432 or the data signal input from the external interface 422, then makes operations such as execution, processing and computation on the above signals, and returns the processed result or data to the television core module 411 or outputs to an external device or external network connected to the external interface 422. Please see the following descriptions of Fig. 4 for the details of the internal units.

The external interface 422 includes any one or a combination of at least two of a Universal Serial Bus (USB) interface 4221, a card reader 4222, a network interface 4223 and other interface 4224. The USB interface 4221 is used for connecting the USB memory or other serial communication device using the USB interface. The card reader 4222 may read many memory cards of different types. The network interface 4223 may connect various external networks such as Ethernet, telephone network, wired network and fiber optic network, and the interface may be in forms of RJ-45, RJ-11, parallel port (LPT port), SC port (fiber port), coaxial port, etc. Other interface 4224 for example may be Integrated Device Electronics (IDE) interface connected to the hard disk or CD driver, Advanced Technology Attachment/ Serial Advanced Technology Attachment (ATA/SATA) interface, mouse interface, keyboard interface, joystick interface, microphone interface, etc.

Serving as a data storage unit of the function extension module 421, the memory 423 may store Audio/Video signal data as well as communication and control signal data. The memory 423 includes a dynamic memory 4231 and a static memory 4232. The static memory 4232 may be a Flash. The dynamic memory 4231 may be a DRAM such as DDR and SDR.

The DC/DC power supply 424 receives a power signal (12V) input from the plug terminals 432. Serving as a switch power supply, the DC/DC power supply 424 may carry out a boosting/dropping operation on the input power signal, convert it into a required fixed voltage and output it to the function extension module 421, the external interface 422 and the memory 423, so as to provide appropriate working voltages to each part.

Fig. 4 is a block diagram of a circuit of a function extension module provided by the present invention.

Referring to Fig. 4, the function extension module 421 of the present invention includes various functional units which may be classified into two types: processing units and interface units. A processing unit includes a central processing unit 4211 and any one or a combination of at least two of a stream media processing unit 4219, a video processing unit 42110, an audio processing unit 42111 and a graphic processing unit 42112. An interface unit includes any one or a combination of at least two of a static memory interface 4212, a dynamic memory interface 4213, a video Input/Output interface 4214, an audio Input/Output interface 4215, a data communication bus 4216, an external device interface 4217, a universal interface 4218, a USB controller 42113, a network card controller 42114 and an ATA interface 42115.

The processing unit is use for executing the received communication and instruction signals, and processing the received Audio/Video signals. For example, the stream media processing unit 4219 is used for processing the received stream media data. The video processing unit 42110 is used for processing the video signal. The audio processing unit 42111 is used for processing the audio signal. The graphic processing unit 42112 is used for producing programming and graphical interface such as program menus, or user interface such as learning screen, entertainment screen and electronic game screen. The central processing unit 4211 is used for controlling all the processing units and interface units, and receiving and performing input communication and control signals.

The interface unit is used for data communications and transmissions within the interior, the exterior and among each unit. For example, the static memory interface 4212 is used for reading and writing operations on the static memory 4232. The dynamic memory interface 4213 is used for reading and writing operations on the dynamic memory 4231. The video Input/Output interface 4214 is used for Input/Output operations of the video signal. The audio Input/Output interface 4215 is used for Input/Output operations of the audio signal. The data communication bus 4216 is used for transmission of the communication and instruction signal, and data communication operations among each internal unit. The external device interface 4217 is used for the communication and data transmission between the function extension module 421 and the external device. The universal interface 4218 supports not only the common interrupt and inquiry low rate data transmission, but also Direct Memory Access (DMA) high rate data transmission, i.e., it supports many types of I/O ports and meets various application demands. The USB controller 42113 is used for reading external USB data, or writing data into an external USB device. The network card controller 42114 is used for the communication and data transmission with the external network, The ATA interface 42115 is used for reading and writing operations on the card reader, the hard disk, the CD driver, etc.

As illustrated in Figs. 3 and Fig.4, the present invention standardizes the extension card 42, so that the extension card 42 is adaptive to wider regions and more factories. The standard modular design of the functional units or interfaces realizes a free and flexible functional configuration and a low cost. During the product design, respective functional units or interfaces only need to be combined upon the function demand. Thus, enough space is reserved for incorporations and applications of new functions, modules and interfaces in the future. It is ready for the association between the future module and the existing module in aspects such as interface specification and software update. A new functional module can be directly incorporated by using the same interface specification and being in conformity with the uniform protocol specification. In addition, the entire system software may be updated through the USB interface, the network interface, etc.

Several application types of the extension card of the present invention are described as follows.
1. Integrated digital television extension card: the function extension module 421 of the integrated digital television extension card includes a STB chip capable of receiving interactive digital TV program signals. The external interface 422 of the integrated digital television extension card includes an RF interface (cable television (CATV) interface), a network interface and an HDMI interface. The high definition digital cable signal can be received and watched through the integrated digital television extension card without the STB.
2. Recordable high definition Mo-card: the function extension module 421 of the recordable high definition Mo-card includes a video processing unit, an audio processing unit, a USB controller and an ATA interface, and it converts the TV program into video files and stores in a Flash chip. The external interface 422 of the recordable high definition Mo-card includes a USB interface and an IDE/ATA/SATA interface, and it may be connected to a USB memory or a mobile hard disk to store the video files. The recordable high definition Mo-card may further include a timer so that the user can record the TV program in a manner of instant recording or timed recording. In addition, the user may download high definition video files such as Motion Picture Expert Group (MPEG) and Transport Stream (TS), and play them with the recordable high definition Mo-card.
3. Learning and entertainment Mo-card: the function extension module 421 of the learning and entertainment Mo-card includes a center processing unit and a graphic processing unit. The static memory 4232 stores programs such as concrete poem recitations, English learning materials and electronic games. The external interface 422 includes joystick interface. The center processing unit and the graphic processing unit may execute the programs stored in the static memory 4232 depending on the options of users, and play the execution result (including graphics menu, audio signal and video signal) through the television 40.

It is should be noted, the above descriptions of the extension card are just for a person skilled in the art to understand the present invention more easily, and the extension card of the present invention is not limited to the above structure. Various new functional units and interface units may be incorporated into the extension card, and a person skilled in the art may combine the functional units, interface units and other functional modules of the extension card upon demand.

Now, a control method of the present invention will be detailedly described with reference to Figs. 3 and 5. Fig. 5 illustrates a flowchart of a control method for a television provided by the present invention. Firstly, the extension card 42 is inserted into the television 40; when the plug terminals 432 of the extension card is inserted into the plug slots 431, their conductive portions contact with each other to form an electric connection; a working voltage provided by the power module 44 is transmitted to the extension card 42 through the plug terminals 432 and the plug slots 431, so that an insertion detection circuit is conducted. The insertion detection circuit may be provided on the extension card, the power module 42 or the television core subsystem 41, and located in a current loop formed by the plug terminals 432 and the plug slots 431. When the plug terminals 432 are electrically connected to the plug slots 431, the current loop is conducted, and the insertion detection circuit outputs an identification signal 1 to the television core subsystem 41. After receiving the identification signal 1, the television core subsystem 41 controls the DC/DC power supply 424 of the television function extension component 32 to be turned on through the communication and control signal. The DC/DC power supply 424 supplies a working voltage to the unit modules on the extension card 42, so that the extension card 42 works normally.

In the preferred embodiment of the present invention, the identification signal 1 output from the insertion detection circuit is corresponding to the function type of the extension card 42. It not only indicates that the extension card 42 has been inserted into the television and electrically connected to the television core subsystem 41, but also notifies the television core subsystem 41 of the function type of the extension card, such as integrated digital television extension card, recordable high definition Mo-card or learning and entertainment Mo-card, etc. For example, the identification signal 1 may indicate extension cards of different function types with a group of binary codes.

Subsequently, the extension card 42 outputs an Audio/Video identification signal 2 to the television core subsystem 41. The Audio/Video identification signal 2 may indicate the types of signals input from the external interface 422 into the extension card 42 through a group of binary codes. These signals include RF signal, Composite Video Broadcast Signal (CVBS), luminance/ chrominance (Y/C) signal, component signal (Y/Pb/Pr), Video Graphics Array (VGA) signal, Digital Visual Interface (DVI) signal, High Definition Multimedia Interface (HDMI) signal and other existing A/V signal.

After receiving the identification signal 2, the television core subsystem 41 switches to corresponding display channel and outputs the Audio/Video content of the extension card 42. The television core subsystem 41 and the extension card 42 perform a signal control and communication with each other through UART/IIC/IR, etc.

Next, the user may select, through a remote controller, whether the programs are watched under a normal TV receiving mode or an extension card mode. The infrared instruction sent from the remote controller is received and decoded by the television 40, then transmitted to the television core module 411 for a processing so as to send a control instruction, which is transmitted to the function extension module 421 of the extension card 42 via the gold finger connector 43 so as to perform corresponding operation. Of course, since the function extension module 421 of the extension card 42 contains an external device interface 4217 capable of receiving IR instructions, the remote controller may also directly perform a data communication with the extension card 42 to control its operations.

Although the preferred embodiments of the present invention have been disclosed for the purpose of illustration, a person skilled in the art will appreciate that various improvements, additions and substitutions are possible without deviating from the scope and spirit of the present invention as disclosed in the accompanied claims.

## Claims

1. A television, comprising:
a television core subsystem disposed inside the television and receiving audio/video signals in different formats;
a television function extension component for providing different function options; and
a gold finger connector electrically connected between the television core subsystem and the television function extension component, comprising:
a first connection end disposed on the television function extension component, comprising a first power signal terminal, a first communication signal terminal, and a first Audio/Video signal terminal; and
a second connection end electrically connected to the television core subsystem, comprising a second power signal terminal, a second communication signal terminal, and a second Audio/Video signal terminal for being electrically connected to the first power signal terminal, the first communication signal terminal, and the first Audio/Video signal terminal of the first connection end, respectively.

2. The television according to claim 1, wherein the television function extension component comprises:
a function extension module electrically connected to the television core subsystem through the gold finger connector, so as to perform a communication and data transmission with each other;
an external interface connected between the function extension module and an external device or an external network, so that the function extension module and the external device or the external network perform a communication and data transmission with each other; and
a memory connected to the function extension module so as to store the data transmitted by the function extension module.

3. The television according to claim 2, wherein the function extension module, the external interface and the memory are disposed on a Printed Circuit Board.

4. The television according to claim 3, wherein the first connection end comprises gold finger plugs made of the Printed Circuit Board.

5. The television according to claim 2, wherein the function extension module comprises a Set Top Box chip.

6. The television according to claim 2, wherein the function extension module comprises any one or a combination of at least two of a stream media processing unit, a video processing unit, an audio processing unit and a graphic processing unit.

7. The television according to claim 2, wherein the external interface comprises any one or a combination of at least two of a universal serial interface, a network interface and a card reader interface.

8. The television according to claim 1, wherein the function extension component further comprises an insertion detection circuit, which generates an identification signal and outputs the identification signal to the television core subsystem when the first connection end of the gold finger connector is electrically connected to the second connection end.

9. A gold finger connector, wherein which is electrically connected between a core system of a display device and a television function extension component, comprising:
a first connection end disposed on the television function extension component, comprising a first power signal terminal, a first communication signal terminal, and a first Audio/Video signal terminal; and
a second connection end electrically connected to the core system of the display device, comprising a second power signal terminal, a second communication signal terminal, and a second Audio/Video signal terminal for being electrically connected to the first power signal terminal, the first communication signal terminal, and the first Audio/Video signal terminal of the first connection end, respectively.

10. The gold finger connector according to claim 9, wherein the television function extension component is an extension card, and the display device is a television.

11. A control method for implementing television function extension, comprises:
providing a gold finger connector electrically connected to a television core system;
providing a television function extension component electrically connected to the gold finger connector; and
providing a power signal output to the television function extension component via the gold finger connector, so that the television function extension component works normally.

12. The control method for implementing television function extension according to claim 11, further comprises:
the television function extension component receiving the power signal and outputting a first identification signal;
the first identification signal being output to the television core system via the gold finger connector;
the television core system receiving the first identification signal and outputting a control signal; and
the control signal being output to the television function extension component via the gold finger connector, so as to control the television function extension component.

13. The control method for implementing television function extension according to claim 11, further comprising:
providing an Audio/Video signal to the television function extension component; and
the television function extension component processing the Audio/Video signal, and the Audio/Video signal being output to the television core system via the gold finger connector.

14. The control method for implementing television function extension according to claim 13, further comprises:
the television function extension component receiving the Audio/Video signal and outputting a second identification signal;
the second identification signal being output to the television core system via the gold finger connector; and
the television core system receiving the second identification signal and switching to the display channel corresponding to the second identification signal.

15. The control method for implementing television function extension according to claim 11, further comprises:
the television core system providing an Audio/Video signal, and the Audio/Video signal being output to the television function extension component via the gold finger connector; and
the television function extension component receiving the Audio/Video signal.
